Europäisches Patentamt

European Patent Office

Office européen des brevets

(11) Publication number: **0 503 498 A2**

# EUROPEAN PATENT APPLICATION

(21) Application number: **92103873.3**

(22) Date of filing: **06.03.92**

(51) Int. Cl.5: **G06F 15/78**, G06F 12/06

(30) Priority: **08.03.91 JP 43859/91**

(43) Date of publication of application:
**16.09.92 Bulletin 92/38**

(84) Designated Contracting States:
**DE FR NL**

(71) Applicant: **Oki Electric Industry Co., Ltd.**
**7-12, Toranomon 1-chome Minato-ku**
**Tokyo(JP)**

(72) Inventor: **Mogi, Makoto, c/o Oki Electric**
**Industry Co. Ltd.**
**7-12 Toranomon 1-chome**
**Minato-ku, Tokyo(JP)**

(74) Representative: **Betten & Resch**
**Reichenbachstrasse 19**
**W-8000 München 5(DE)**

(54) **Single-chip microcomputer with program/data memory flag.**

(57) A single-chip microcomputer uses a program memory for storing fixed data and a data memory for storing variable data. When an instruction having a memory operand is executed, a bus controller in the microcomputer sends the same operand address to the program memory and data memory simultaneously. Program memory or data memory is selected by a flag circuit in the microcomputer.

FIG. 2

BACKGROUND OF THE INVENTION

This invention relates to a single-chip microcomputer, more particularly to a microcomputer with a flag for directing read access to either a program memory or a data memory.

Single-chip microcomputers, known also as microcontrollers, are found in all sorts of electronic and electrical equipment. Many single-chip microcomputers access two separate memories: a program memory for storing instructions and fixed data, and a data memory for storing variable data.

Prior-art single-chip microcomputers of this type generally have an instruction set with arithmetic and logic instructions that can operate directly on operands disposed either in internal registers or in data memory. To perform an operation involving an operand stored in program memory, it is first necessary to move that operand into an internal register using a special instruction such as a MOVC (move code) instruction.

This causes two problems. One is that the operation takes longer to perform, because of the extra time spent fetching and executing the MOVC instruction. The other is that one extra MOVC instruction must be stored in the program memory for each operation having operand data in program memory. These MOVC instructions add considerably to the length of the program.

SUMMARY OF THE INVENTION

It is accordingly an object of the present invention to enable the same instruction to read data from either program memory or data memory.

Another object of the invention is shorten program length.

A further object of the invention is to speed up program execution.

The invented single-chip microcomputer has a central processing unit that decodes an instruction read from program memory and generates an operand address. A bus controller sends the operand address to program memory and data memory simultaneously. A flag circuit has a first state that selects program memory for reading data from the operand address, and a second state that selects data memory for reading data from the operand address.

BRIEF DESCRIPTION OF THE DRAWINGS

Fig. 1 is an address map illustrating program memory and data memory.

Fig. 2 is a general block diagram of a single-chip microcomputer embodying the invention.

Fig. 3 is a more detailed drawing of the novel bus interface in Fig. 2.

Fig. 4 is a timing diagram illustrating the reading of an operand from program memory.

Fig. 5 is a timing diagram illustrating the reading of an operand from data memory.

DETAILED DESCRIPTION OF THE INVENTION

An embodiment of the invention will be described with reference to the attached drawings. These drawings will illustrate the invention but they do not restrict its scope,

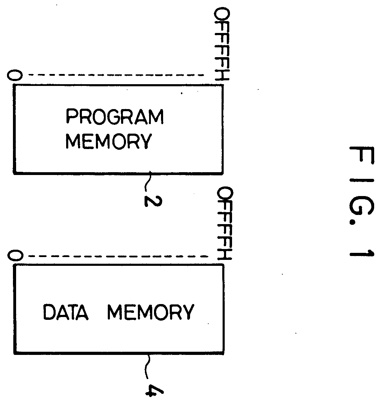

Referring to Fig. 1, the invented single-chip microcomputer reads instructions and fixed data from a program memory 2, and reads and writes variable data in a data memory 4. Locations in the program memory and data memory are indicated by identical addresses, such as addresses ranging from zero to hexadecimal FFFF as shown in the drawing. An advantage of this two-memory scheme is that it doubles the total amount of memory the microcomputer can access with a given number of address bits. In Fig. 1, for example, only sixteen address bits are needed to access both the program memory 2 and the data memory 4.

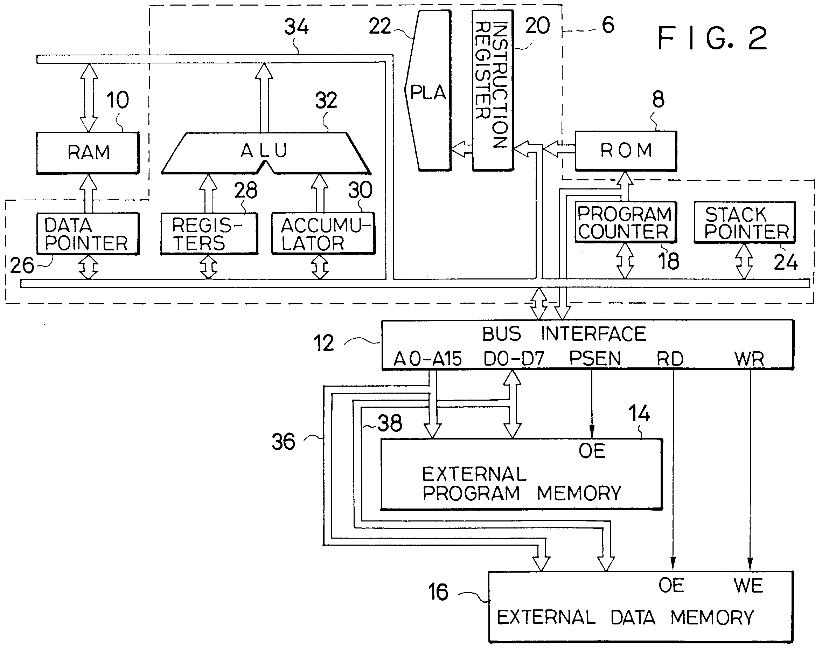

Referring to Fig. 2, the single-chip microcomputer comprises a central processing unit (CPU) 6, an on-chip read-only memory (ROM) 8, an on-chip random access memory (RAM) 10, and a bus interface 12. The CPU 6 uses the bus interface 12 to access an external program memory 14 and an external data memory 16. The ROM 8 and the external program memory 14 are both part of the program memory 2 in Fig. 1. The RAM 10 and the external data memory 16 are both part of the data memory 4 in Fig. 1.

The CPU 6 reads instructions from the ROM 8 and the external program memory 14, and decodes and executes the instructions one by one. The instructions include arithmetic and logic instructions which may have memory operands. For instructions with memory operands the CPU 6 generates an appropriate operand address, and accesses its on-chip ROM 8 or RAM 10 or the external program memory 12 or data memory 14 at the operand address. A brief description will be given next of the way in which the CPU 6 operates.

The CPU 6 comprises a program counter 18, an instruction register 20, an instruction decoder 22, a stack pointer 24, a data pointer 26, one or more registers 28, an accumulator 30, and an arithmetic and logic unit (ALU) 32. All of these components except the instruction decoder 22 are linked by an internal data bus 34.

The program counter 18 is, for example, a sixteen-bit counter which is incremented to generate the addresses of successive program locations in the ROM 8 or the external program memory 14. Values can also be loaded into the program counter 18 from the internal data bus 34 in response to a jump instruction, subroutine call, interrupt, reset, or the like. The instruction at the location addressed by the program counter 18 is read from program memory into the instruction register 20.

The instruction decoder 22 is, for example, a programmable logic array (PLA) that decodes the instruction in the instruction register 20 to generate control signals, not explicitly indicated in the drawing, that control the other circuits in the single-chip microcomputer. The stack pointer 24 designates a data memory address used for saving and restoring data. The data pointer 26 designates a data memory address in the RAM 10. The registers 28 and accumulator 30 are used for temporary storage of operand data. The ALU 32 performs an operation on, for example, data in one of the registers 28 and data in the accumulator 30, or data read from memory and data in the accumulator 30, and places the result in the accumulator 30. Details of these operations will be omitted since they are familiar to all those skilled in the art.

Next the functions of the bus interface 12, the external program memory 14, and the external data memory 16 will be described.

The bus interface 12 has, for example, sixteen address output terminals A0 to A15 from which it sends an address on an external address bus 36. The address is sent to both the external program memory 14 and the external data memory 16 simultaneously.

The bus interface 12 also has a terminal marked PSEN in the drawing from which it sends a read strobe signal to the external program memory 14, a terminal marked RD from which it sends a read strobe signal to the external data memory 16, and a terminal marked WR from which it sends a write strobe signal to the external data memory 16. In the following description it will be assumed that these read and write strobe signals are all active low.

The bus interface 12, the external program memory 14, and the external data memory 16 are further interconnected by an external data bus 38 comprising, for example, eight data signal lines D0 to D7.

The external program memory 14 has an output enable (OE) terminal which is connected to the PSEN terminal of the bus interface 12. When the external program memory 14 receives a read strobe signal at the OE terminal, it fetches data (which may be operand data or instruction code) from the address indicated on the external address bus 36 and places the data on the external data bus 38.

The external data memory 16 has an OE terminal which is connected to the RD terminal of the bus interface 12. The OE terminal of the external data memory 16 is similar in function to the OE terminal of the external program memory 14, causing the external data memory 16 to place data on the external data bus 38.

The external data memory 16 also has a write enable (WE) terminal which is connected to the WR terminal of the bus interface 12. When the external data memory 16 receives a write strobe signal at the WE terminal it latches the data on the external data bus 38 and stores the latched data at a location indicated by the address on the external address bus 36.

When the CPU 6 reads an instruction or data from the external program memory 14, the bus interface 12 outputs the appropriate address on the external address bus 36 and sends a read strobe signal from the PSEN terminal. The external program memory 14 responds by sending the instruction code or data from the indicated address to the bus interface 12 via the external data bus 38.

When the CPU 6 reads data from the external data memory 16, the bus interface 12 outputs the appropriate address on the external address bus 36 and sends a read strobe signal from the RD terminal. The external data memory 16 responds by sending the data from the indicated address to the bus interface 12 via the external data bus 38.

When the CPU 6 writes data to the external data memory 16, the bus interface 12 outputs the appropriate address on the external address bus 36, sends a write strobe signal form the WR terminal, and places the write data on the data bus 38. When it receives the write strobe signal at its WE terminal, the external data memory 16 latches and stores the data on the external data bus 38.

The novel feature of the present invention is the way in which the bus interface 12 generates read strobe signals at the PSEN and RD terminals. This will be described next.

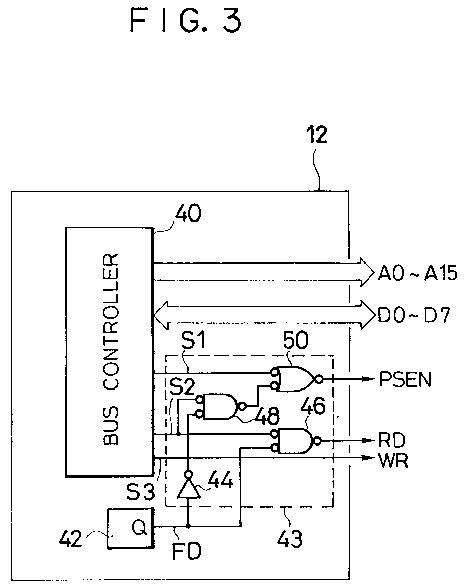

Referring to Fig. 3, the bus interface 12 comprises a bus controller 40, a flag circuit 42, and a redirection circuit 43 having an inverter 44, a first gate 46, a second gate 48, and a third gate 50.

The bus controller 40 sends address signals from the address terminals A0 to A15, sends and receives data at the data terminals D0 to D7, generates a first read strobe signal S1 for fetching instructions, generates a second read strobe signal S2 for reading operand data, and generates a write strobe signal S3 for writing data. The write strobe signal S3 is connected directly to the WR terminal of the bus interface 12. The three strobe signals S1, S2, and S3 are all active low.

The flag circuit 42 is an RS-type flip-flop circuit or similar circuit that has two states: a first state that selects the external program memory 14 for reading operand data, and a second state that selects the external data memory 16 for reading operand data. The instruction set of the CPU 6 includes flag-setting instructions for setting the flag circuit 42 to its first and second states. The flag circuit 42 has an output terminal Q from which it outputs a signal indicating its present state. In the drawing, the Q output is high in the first state and low in the second state.

The inverter 44 receives and inverts the Q output from the flag circuit 42.

The first gate 46 receives the second read strobe signal S2 from the bus controller 40 and the Q output from the flag circuit 42 and passes the second read strobe signal S2 to the RD terminal of the bus interface 12 when the flag circuit 42 is in the second state, that is, when the Q output is low. In the drawing the first gate 46 is shown as an AND gate that is adapted to invert all its input and output signals. When Q is low, S2 passes through the first gate 46 unchanged to the RD terminal. When Q is high, S2 does not pass through the first gate 46; the output of the first gate 46 is always high (inactive).

The second gate 48 receives the the second read strobe signal S2 from the bus controller 40 and the inverted Q output from the inverter 44 and passes the second read strobe signal S2 through as an output signal when the flag circuit 42 is in the second state, that is, when the Q output is high and the inverted Q output is low. Like the first gate 46, the second gate 48 is an AND gate adapted to invert all its input and output signals.

The third gate 50 receives the first read strobe signal S1 from the bus controller 40 and the second read strobe signal S2 as output from the second gate 48, and passes both of these signals to the PSEN terminal of the bus interface 12. The third gate 50 is shown as an OR gate adapted to invert all its input and output signals. The output (PSEN) of the third gate 50 is active (low) when either S1 or the output of the second gate 48 is active (low).

The operation of the novel single-chip microcomputer in executing arithmetic and logic operations with source operands in external memory will be described next.

Consider first the case of an arithmetic or logic operation such as an addition operation performed using fixed operand data PK stored in the external program memory 14. The program in this case comprises a flag-setting instruction that sets the flag circuit 42 to the first state (Q high), followed by an add instruction specifying the address of the data PK as an operand.

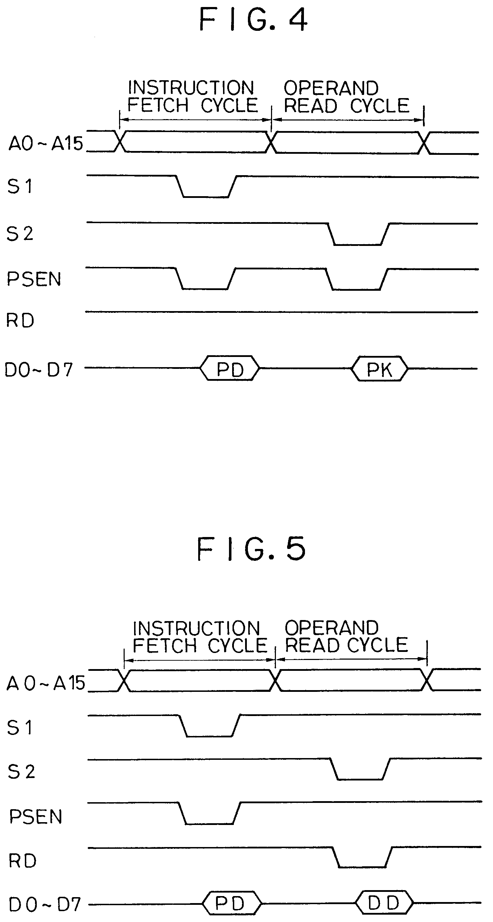

Referring to Fig. 4, to execute the add instruction the CPU 6 must first fetch the instruction from the external program memory 14. It therefore generates signals that cause the bus controller 40 to place the address of the add instruction on the address bus (A0-15) and activate the first read strobe signal S1. The third gate 50 in Fig. 3 passes the first read strobe signal S1 to the PSEN terminal of the bus interface 12. Receiving the read strobe signal from the PSEN terminal, the external program memory 14 places the instruction code PD of the add instruction on the data bus (D0-D7). The instruction code PD is then brought into in the instruction register 20, decoded, and executed.

Execution of this add instruction now causes the bus controller 40 to place the address of the operand data PK on the address bus (A0-A15) and activate the second read strobe signal S2. Since the flag circuit 42 is in the first state (Q high), the redirection circuit 43 directs the second read strobe signal S2 to the PSEN terminal of the bus interface 12. Specifically, the second read strobe signal S2 passes through the second gate 48 and the third gate 50 to the PSEN terminal, but does not pass through the first gate 46 to the RD terminal. Receiving the read strobe signal from the PSEN terminal, the external program memory 14 places the operand data PK on the data bus (D0-D7). The bus controller 40 transfers the operand data PK to the internal data bus 34 in the CPU 6, thence to the ALU 32 which carries out the addition operation.

Consider next the case of the same addition operation performed using variable operand data DD stored in the external data memory 16. The program in this case comprises a flag-setting instruction that sets the flag circuit 42 to the second state (Q low), followed by the above-described add instruction, this time specifying the address of the data DD as an operand.

Referring to Fig. 5, the add instruction is fetched from the external program memory 14 in the same way as before, the first read strobe signal S1 being activated to drive the PSEN terminal low.

When the CPU 6 executes the add instruction, the bus controller 40 places the address of the operand data DD on the address bus (A0-A15) and this time activates the second read strobe signal S2. Since the flag circuit 42 is in the second state (Q low), the redirection circuit 43 directs the second read strobe signal S2 to the RD terminal of the bus interface 12. Specifically, the second read strobe signal S2 passes through the first gate 46 to the RD terminal but does not pass through the second gate 48, so does not reach the PSEN terminal. Receiving the read strobe signal from the RD terminal, the external data memory 16 places the operand data DD on the data bus (D0-D7). The bus controller 40 transfers the operand data DD to the internal data bus 34 in the CPU 6 and the ALU 32 carries out the addition operation.

Compared with the MOVC instruction of the prior art, the flag-setting instructions of the novel single-chip microcomputer have at least two advantages. One advantage is that the action of a flag-setting instruction is simpler than the action of the MOVC instruction, so the flag-setting instruction can be implemented by simpler circuitry and executed more rapidly than the MOVC instruction.

A second advantage is that the flag-setting operation does not have to be performed every time an operand is read from program memory. If a series of arithmetic or logic operations is performed using fixed operand data, for example, only one flag-setting instruction is needed to select program memory at the beginning of the series. Similarly, for a series of operations using variable operand data, a single flag-setting instruction suffices to select data memory. This second advantage becomes particularly noteworthy in operations on tables and arrays of fixed data, where it can significantly reduce program size and speed up program execution.

The preceding description has covered only external memory access, but this is not a restriction. The invention can be applied in the same way to distinguish between operands stored in on-chip ROM and on-chip RAM.

Nor is the invention restricted to arithmetic and logic operations. The flag circuit 42 can also control data transfer operations, permitting the same MOV instruction, for example, to transfer data from either program memory or data memory to an internal register.

Those skilled in the art will notice various modifications that can be made in the preceding embodiment without departing from the spirit and scope of the invention. For example: the read strobe signals can be active high instead of active low, and the roles of high and low in the output of the flag circuit 42 can be reversed. Suitable modifications must then be made in the gates of the redirection circuit 43. The flag circuit 42 need not be an RS-type flip-flop but can be a D-type flip-flop or some other type of bistable circuit. The flag circuit 42 may produce a low output in the first state and a high output in the second state.

## Claims

1. A single-chip microcomputer that reads instructions and fixed operand data from a program memory and reads variable operand data from a data memory, comprising:
   central processing means for decoding an instruction and generating an operand address;
   bus control means, coupled to said central processing means, for sending said operand address to said program memory and said data memory simultaneously; and
   flag means, coupled to said central processing means, having a first state that selects said program memory for reading of data from said operand address, and a second state that selects said data memory for reading of data from said operand address.

2. The microcomputer of claim 1, wherein said central processing means executes flag-setting instructions for setting said flag means to said first state and said second state.

3. The microcomputer of claim 1, wherein said bus control means generates a first read strobe signal for fetching instructions and a second read strobe signal for reading operand data.

4. The microcomputer of claim 3, also comprising redirection means coupled to direct said second read strobe signal to said program memory when said flag means is in said first state and to direct said second read strobe signal to said data memory when said flag means is in said second state.

5. The microcomputer of claim 4, wherein said redirection means comprises:
   a first gate coupled to pass said second read strobe signal to said data memory when, and only when, said flag means is in said second state;
   a second gate coupled to pass said second read strobe signal as output when, and only when, said flag means is in said first state; and
   a third gate coupled to receive said first read strobe signal from said bus control means and said second read strobe signal as output from said second gate, and pass both said first read strobe signal and said second read strobe signal to said program memory.

# F I G. 1

FIG. 2

EP 0 503 498 A2

F I G. 3

# F I G. 4

INSTRUCTION FETCH CYCLE | OPERAND READ CYCLE

A0 ~ A15

S 1

S 2

PSEN

RD

D0 ~ D7 ⟨PD⟩ ⟨PK⟩

# F I G. 5

INSTRUCTION FETCH CYCLE | OPERAND READ CYCLE

A 0 ~ A 15

S 1

S 2

PSEN

RD

D 0 ~ D 7 ⟨P D⟩ ⟨D D⟩